# EUROPEAN PATENT SPECIFICATION

(11) **EP 2 132 059 B1**
(45) Date of publication and mention of the grant of the patent: **08.08.2012**
(21) Application number: 08730991.0
(22) Date of filing: 28.02.2008
(51) Int. Cl.: B60R 13/10, G02B 6/00

(54) **ILLUMINATED LICENSE PLATE**
BELEUCHTETES NUMMERNSCHILD
PLAQUE D'IMMATRICULATION ÉCLAIRÉE

(30) Priority: 30.03.2007 GB 0706289
(43) Date of publication of application: 16.12.2009
(73) Proprietor: 3M Innovative Properties Company, Saint Paul, MN 55133-3427 (US)
(72) Inventor: FRISCH, Ruediger T.,, 41453 Meiss (DE)
(74) Representative: Hohmann, Arno
(86) International application number: PCT/US2008/055329
(87) International publication number: WO 2008/121475

(56) References cited:
- EP-A1- 1 477 368
- EP-A1- 1 477 368
- EP-A1- 1 512 583
- JP-A- 2000 113 708
- JP-A- 2000 113 708
- JP-A- 2000 292 133

## Description

The invention relates to an illuminated license plate for a vehicle having a light guide and a retroreflective sheet that faces the light guide with its retroreflective side. The light guide comprises particles for scattering light within the light guide which are distributed within a matrix of a transparent polymeric material. The invention is also related to a license plate assembly comprising such license plate, a device for holding such license plate and a method of making a license plate.

Commonly license plates for motor vehicles such as cars, busses and trucks and for trailers, typically can be illuminated by lights arranged on the vehicles. The license plates typically have indicia which thereby are made visible under conditions of low illumination such as ambient darkness or inside a poorly lit parking garage. Usually such indicia represent, for example, the license plate number issued by the appropriate national authorities. Typically, the lights for illumination of a license plate are arranged at the vehicles aside of the license plate so that its front face is not obscured by the lights and the license plate is visible from its front.

Such an arrangement has the disadvantage of limiting the design possibilities of car manufacturers, for example, because the license plate and the lights have to be arranged in a certain relationship that allows the light coming from the lights to reach the front face of the license plate. In particular, a vehicle design usually has to include a part for holding the lights which is arranged aside of the license plate but projects relative to the front face of the license plate. Therefore the car manufacturers are hindered in making more appealing designs, in particular they are limited in providing a flat design of the design portions that include the lights and the license plate. The parts holding the lights often also generally appear as a disturbing element in the design. Furthermore, such conventionally front-illuminated license plates may generally be illuminated non-uniformly so that recognition in the dark may be difficult, particularly under bad weather conditions such as rainfall.

In the recent years a variety of solutions for alternative illumination of license plates of vehicles have been disclosed or provided. In particular, a recent development relates to the use of so-called backlit license plates and internally illuminated license plates. Backlit license plates are typically light transmissive and a light source for illumination is arranged behind the license plate. Internally illuminated license plates typically have an integrated light source, for example a layer of light emitting material is arranged within the license plate.

A further example of an internally illuminated license plate is disclosed in WO 2004/101321. This license plate has a retroreflective film and indicia in front of a light guide for more homogeneous illumination.

Although these recently developed backlit license plates offer a number of advantages, there is still a need for a solution that provides for illumination of a license plate at an optimized efficiency because it is generally difficult to minimize losses of light intensity with backlit license plates.

There are further approaches that relate to internally illuminated license plates. Such license plates may include an electroluminescent layer as for example disclosed in WO 03/062014 A1 or they may include a light pipe as suggested in US 5.150,960.

EP-A- 1 512 583 discloses a license plate assembly comprising a light guide. The light guide may have light-scattering particles added to the transparent material of the light guide. The license plate assembly further has a license plate which comprises a retroreflective sheet.

However it is also generally difficult to illuminate the license plate efficiently and homogeneously from the front, and at the same time maintaining other optical characteristics of the license plate in a desired range. It is, for example, desirable that the license plate provides certain retroreflectivity properties. In this regard, there may be certain requirements in at least some countries where the license plates are issued. For example there may be limits for the intensity of the light that must be reflected. There may further be requirements about the angle at which light has to be reflected from the license plate in relationship to the incident light. Furthermore it is desired to minimize absorption of light that is directed to or reflected from the retroreflective side of the retroreflective sheet. It will typically also be desired that the light be uniformly retroreflected from the license plate.

There is also a need for a solution that provides a relatively low power consumption and which minimizes losses of energy, for example losses of light intensity within the elements involved in providing illumination. It is also desired, that those elements and the license plate are robust and durable in use with the vehicle. It would also be desirable to find a solution that allows taking full advantage of the benefits of an internally illuminated license plate, in particular with respect to the car design. It is further desirable that this solution is easy and convenient without increasing or at least not substantially increasing the cost of the license plate and/or the vehicles.

A first aspect of the invention is related to a license plate for vehicles. The license plate comprises a light guide that comprises a transparent polymeric material A. Within the transparent polymeric material A a material B is distributed for scattering light within the transparent polymeric material A. Further, the license plate comprises a retroreflective sheet having a retroreflective face that faces a first side of the light guide. Preferably the transparent polymeric material A forms a matrix and the material B forms particles with the particles being distributed in the matrix for scattering light within the light guide.

By the term "retroreflective face" is meant the side of the retroreflective sheet from which light is retroreflected when light impinges on that side.

Typically, the invention provides the advantage of providing efficient license plate illumination. For example, a minimized light intensity may be required to sufficiently illuminate relevant parts of a license plate. Another advantage typically is that the homogeneity of the illumination may be optimized. Further, the license plate may have a variety of good optical characteristics due to a relative high transparency of the light guide as it may be used with the invention. One aspect of an optimized homogeneous illumination may be reduced decrease in the illumination intensity drop across the license plate in directions away from the light source(s). The invention may further help to maintain the retroreflective efficiency of the retroreflective sheet. It is also an advantage of the invention that the efficient illumination and maintaining the retroreflective efficiency may be achieved in combination. Another advantage may be provided by the possibility to protect indicia that may be arranged between the retroreflective sheet and the light guide, thus reducing ease of counterfeiting. It is also advantageous that the invention allows for back illumination of the indicia (unlighted indicia on lighted background) and/or front illumination of the indicia (lighted indicia on lighted background). Still another advantage may be provided because the license plate does not require separate layers for illumination and light scattering. The license plate of the invention is generally also easy to manufacture at relatively low costs. Conveniently, the license plate according to the present invention can be produced in existing manufacturing methods for existing license plates using existing equipment or with only slightly modified equipment.

The retroreflective side of the retroreflective sheet provides for returning light substantially in a direction of its source. Further, the light directed on the retroreflective side is returned substantially in a direction of its source substantially independent from the angle of incidence.

The material B of which the particles are made is typically a polymeric material, for example a transparent polymeric material. In a particular embodiment the particles are transparent when embedded in the transparent polymeric material A.

In a particular embodiment, the material B has a refractive index and the transparent polymeric material A has a refractive index, and the refractive index of the material B is different from the refractive index of the transparent polymeric material A. In particular the particles have a refractive index and the matrix has a refractive index, with the refractive indices of the particles and the matrix being different from each other. The difference between the refractive indices can be chosen conveniently by one skilled in the art to obtain the optimal scattering of light within the polymeric matrix of the light guide and to achieve the desired uniform distribution of light in the light guide.

Generally the material B has a refractive index that is at least by 0.01 units different from the refractive index of the transparent polymeric material A. More preferably the particles for scattering light have a refractive index that is at least by 0.01 units different from the refractive index of the matrix. Typically the difference between the refractive indices of the material B or the particles and the material A or the matrix, respectively, is between 0.01 and 0.122, in particular between 0.01 and 0.03.

In particular, the refractive index of the material B is preferably higher than the refractive index of the transparent polymeric material A, and in more particular the refractive index of the material B is preferably at 0.01 higher and most preferably at 0.02 units higher than the refractive index of the transparent polymeric material A. More preferably, the refractive index of the particles is preferably higher than the refractive index of the matrix, and in more particular the refractive index of the particles is preferably at 0.01 higher and most preferably at 0.02 units higher than the refractive index of the matrix.

Preferably, the material B is distributed in the transparent polymeric material A in an amount of 0.01% to 20% by weight of the transparent polymeric material A. More preferably, the particles for scattering light are distributed in the matrix in an amount of 0.01% to 20% by weight of the matrix.

Preferably the particles for scattering light have an average diameter of between 1 µm and 50 µm, and more preferably of between 2 µm and 20 µm. The standard deviation of the particle size is preferably less than 30% of the average size of the particles distributed within 0.1 kg matrix.

In an embodiment of the invention the transparent polymeric material A and/or the matrix comprises at least one of polymethylmethacrylate, polycarbonate, polyester and mixtures thereof. Further, the material B and/or the particles may comprise at least one of polymethylmethacrylate, polycarbonate, polyester and mixtures thereof.

Generally polymeric materials that may be used as transparent polymeric material A and/or for the matrix include thermoplastic polymers such as polycarbonates, polymethacrylates such as polymethylmethacrylate, polyolefins such as polyethylene and polypropylene, polyesters such as polyethyleneterephthalates and polyethylenenaphthalates, cellulose acetate, polyvinyl chloride and terpolymers of acrylonitrile, styrene and butadiene. The transparent polymeric material A and/or the matrix may further include cross-linked material.

In an embodiment, the light guide, preferably in particular at least the transparent polymeric material A and/or the matrix of the light guide is/are cold-formable. By "cold-formable" in connection with the invention is meant that raised areas, for example indicia, can be formed in the light guide at ambient temperature (20°C to 35°C) and that such raised areas are stable at elevated temperatures to which the license plate may be exposed, for example when the motor vehicle is exposed to the sun.

Forming of such raised areas may be done, for example, through mechanical deformation like embossing or deep drawing. This typically requires that the polymeric material has sufficient heat stability, i.e. the polymeric material should typically be heat stable up to temperatures of 60 °C to 85 °C. Without sufficient heat stability, the indicia of the license plate may fade over time or become distorted if it is formed in the light guide. This will be particularly the case when the indicia are cold-formed through embossing of the light guide because of stress forces created in the polymeric material during the embossing. Transparent polymeric materials that are cold-formable that may be used for the matrix include, for example, polycarbonate, polyvinyl chloride, polyethylene and polypropylene.

In a particular embodiment, the transparent polymeric material A comprises a first polymethylmethacrylate and the material B preferably comprises a second polymethylmethacrylate. Furthermore, the matrix may comprise a first polymethylmethacrylate and the particles may comprise a second polymethylmethacrylate. Preferably the first and second polymethylmethacrylates have different refractive indices.

Preferably the transparent polymeric material A and/or the matrix comprise(s) an acrylic polymer, in particular at least 50% by weight of a polymethylmethacrylate. The material B and/or the particles preferably comprise(s) an acrylic ester, in particular a methacrylic ester in a concentration of up to 80% by weight of the material B and/or the particles, respectively.

In a particular embodiment the light guide may have a thickness of between 1 mm and 20 mm. In particular the light guide may have a thickness of between 1 mm and 3 mm, and preferably an average thickness of 2.25 mm.

The retroreflective sheet for use with the present invention may be a non-transparent, semi-transparent or transparent sheet. A transparent retroreflective sheet for use in connection with the present invention may be a single layer sheet but is typically a multi-layer sheet. The retroreflective sheet may be a microsphere based retroreflective sheet or a so-called cube corner based retroreflective sheet. Microsphere based sheeting, sometimes referred to as "beaded sheeting", is well known in the art and includes a multitude of microspheres, for example glass or ceramic microspheres, typically at least partially embedded in a binder layer, and associated with specular or diffuse reflecting material. The reflective material should be provided functionally behind the microspheres. By "functionally behind" is meant that the reflective material is provided behind the microspheres in such a way that in conjunction with the microspheres light will be retroreflected. Typically, this means that the reflective material is directly provided on the microspheres or is slightly spaced away, through a space coat, from the microspheres to adjust to the focal point of the microspheres. Illustrative examples of microsphere-based sheeting are disclosed in U.S. Pat. Nos. 4,025,159 (McGrath); 4,983,436 (Bailey); 5,064,272 (Bailey); 5,066,098 (Kult); 5,069,964 (Tolliver); and 5,262,225 (Wilson).

The reflective material in one embodiment of this invention can be a reflective layer, for example a metal layer. A dielectric mirror may also be provided as the reflective layer or in combination with a metal layer. The dielectric mirrors may be similar to known dielectric mirrors disclosed in U.S. Pat. Nos. 3,700,305 and 4,763,985.

In using dielectric mirrors with microspheres, the microspheres typically have a refractive index n₂ and have a layer of transparent material disposed thereon which has a refractive index n₁. The opposite face of the transparent material having refractive index n₁, is in contact with a material having a refractive index n₃. Both n₂ and n₃ have a refractive index of at least 0.1, preferably at least 0.3, higher or lower than n₁. The transparent material is a layer typically having an optical thickness corresponding to odd numbered multiples (that is, 1, 3, 5, 7 ... ) of about one-quarter wavelength of light in the wavelength range of about 380 to about 1,000 nanometers. Thus, either n₂ >n₁ <n₃ or n₂ <n₁ >n₃, and the materials on either side of the transparent layer may be either both higher or both lower in refractive index than n₁. When n₁, is higher than both n₂ and n₃, n₁ is preferably in the 1.7 to 4.9 range, and n₂ and n₃ are preferably in the 1.2 to 1.7 range. Conversely, when n₁ is lower than both n₂ and n₃, n₁ is preferably in the 1.2 to 1.7 range, and n₂ and n₃ are preferably in the 1.7 to 4.9 range. The dielectric mirror preferably comprises a contiguous array of materials, at least one being in layer form, having an alternating sequence of refractive indices. In a preferred embodiment the contiguous array has from two to seven layers, preferably three to five layers. Desirably all are light transparent materials and are clear or essentially colorless to minimize light absorption. Among the many compounds that may be used in providing transparent materials within the desired refractive index range are: high index materials such as CdS, CeO₂, CsI, GaAs, Ge, InAs, InP, InSb, ZrO₂, Bi₂ O₃, ZnSe, ZnS, WO₃, PbS, PbSe, PbTe, RbI, Si, Ta₂O₅, Te, TiO₂ ; low index materials such as Al₂O₃, AlF₃, CaF₂, CeF₃, LiF, MgF₂, NaCl, Na₃AlF₆, ThOF₂, elastomeric copolymers of perfluoropropylene and vinylidene fluoride et cetera. Other materials are reported in Thin Film Phenomena, K. L. Chopra, page 750, McGraw-Hill Book Company, New York, (1969). Preferred succeeding layers contain cryolite (Na₃ AIF₆) and zinc sulfide.

Dielectric mirrors or similar multi-layer reflective coatings can also be used in combination with cube corner sheeting as disclosed in e.g. JP 06-347622, US 6,172,810, US 6,224,219, US 6,243,201 and US 6,350,034.

Cube corner sheeting, sometimes referred to as prismatic, microprismatic, triple mirror or total internal reflection sheetings, typically include a multitude of cube corner elements to retroreflect incident light. Cube corner retroreflectors typically include a sheet having a generally planar front surface and an array of cube corner elements protruding from the back surface. Cube corner reflecting elements include generally trihedral structures that have three approximately mutually perpendicular lateral faces meeting in a single corner, i.e. a cube corner. In use, such cube corner retroreflector is typically arranged with its front surface disposed generally toward the anticipated location of intended observers. Light incident on the front surface enters the sheet and passes through the body of the sheet to be reflected by each of the three faces of the elements, so as to exit the front surface in a direction substantially toward the source of the light incident on the front surface. In the case of total internal reflection, the air interface must remain free of dirt, water and adhesive and therefore is enclosed by a sealing film. Alternatively, reflective coatings may be applied on the lateral faces of the cube corners. Suitable reflective coatings that can be applied include transparent reflective metal layers or a dielectric mirror as described. When the cube corner elements are provided with a reflective coating they can also be used in a configuration where they are generally positioned towards the anticipated location of an intended observer.

Polymers for cube corner sheeting include polycarbonate, polymethylmethacrylate, polyethylene terephthalate, aliphatic polyurethanes, as well as ethylene copolymers and ionomers thereof. Cube corner sheeting may be prepared by casting directly onto a film, such as described in U.S. Patent No. 5,691,846 (Benson, Jr.). Polymers for radiation-cured cube corners include cross-linked acrylates such as multifunctional acrylates or epoxies and acrylated urethanes blended with mono-and multifunctional monomers. Further, cube corners may be cast on to plasticized polyvinyl chloride film for more flexible cast cube corner sheeting. These polymers are often employed for one or more reasons including thermal stability, environmental stability, clarity, excellent release from the tooling or mold, and capability of receiving a reflective coating.

In an embodiment of this invention the cube corner sheeting may have a further polymeric layer bonded to the side of the cube corner sheeting that has the cube corner elements so as to form a plurality of closed cells in which an air interface is provided to the cube corner elements. Illustrative examples of cube corner-based retroreflective sheeting are disclosed in U.S. Pat. Nos. 4,588,258 (Hoopman); 4,775,219 (Appledorn et al.); 4,895,428 (Nelson); 5,138,488 (Szczech); 5,387,458 (Pavelka); 5,450,235 (Smith); 5,605,761 (Burns); 5,614,286 (Bacon Jr.) and 5,691,846 (Benson, Jr.).

In an embodiment of the invention the retroreflective sheet is deformable, for example cold-formable (for example 20°C to 35 °C) or warm-formable (for example 65 °C to 300 °C). The term "deformable" also anticipates that deformed areas and/or areas adjacent such deformed areas may have worse or no retroreflective properties. In a particular embodiment the retroreflective sheet and the light guide are deformable, for example cold-formable or warm-formable. In a preferred embodiment the retroreflective sheet and the light guide form a laminate that is cold-formable. Such laminate may comprise further layers arranged on the light guide and/or the retroreflective sheet or between.

In an embodiment of the invention at least one light transmissive layer is arranged between the retroreflective sheet and the light guide. For example, a layer of adhesive may be used to attach the retroreflective sheet to the light guide.

The license plate typically will have shape and dimensions conforming to relevant regulatory requirements.

The license plate typically comprises indicia that represent an identification code as it may be issued by a relevant authority. In a particular embodiment at least part of the indicia are arranged on a front face of the license plate. At least part of the indicia may be directly or indirectly arranged on the front face of the license plate. Indirect arrangement of indicia would, for example, mean that an additional layer or additional layers may be arranged between the indicia and the license plate.

The front face of the license plate is also the side that a viewer typically looks at to recognize the indicia.

Preferably the front face of the license plate corresponds to a second side of the light guide which is the side opposite to the first side that faces the retroreflective sheet. In case the light guide has a further layer or further layers on its second side the front face of the license plate preferably corresponds to the outer surface of the front most layer.

The Indicia may represent an identification code. Further, the indicia may comprise for example a country or state logo or a code giving the date of issuance of the license plate. Indicia may also comprise a security code and/or an indication of the manufacturer of the license plate. At least some of the indicia may be in machine readable form such as in the form of an OCR (Optical Character Recognition) font or a bar code, for example.

The indicia of the license plate can be formed by any technique used in producing license plates. For example, the indicia, in particular those representing an identification code, may be printed, for example by thermal transfer printing or by ink jet printing. The indicia may also be cut out of an adhesive film and applied on a layer of the license plate. The indicia may be printed on or otherwise applied, for example glued, on the front face of the license plate or they may be buried in the license plate.

The front face of the license plate may comprise a structure defining at least part of the indicia. In particular, at least part of the indicia may be defined by structures that are raised with respect to the license plate front face. By raised indicia is meant that the indicia project from the front face of the license plate. Typically such indicia form a raised surface, generally parallel to the license plate front face. Typically the indicia may be raised by 0.3 mm to 20 mm relative to the front face of the license plate, preferably 0.5 mm to 15 mm. Preferably raised indicia are made by deformation of the light guide and the retroreflective sheet, for example, by embossing or deep drawing of the light guide together with the retroreflective sheet. In this case, the light guide and the retroreflective sheet may form an assembly or laminate. Preferably the raised surface of the indicia will be colored to render the indicia opaque or at least less transparent than the background of the license plate. Typically the raised surface may be colored by foil hot stamping or by roll coating with inks.

Generally the indicia typically have a color different from background areas of the license plate. A background area may, for example, be represented by the retroreflective side of the retroreflective sheet which may be visible through the front face of the license plate. For example, such background area may be generally bright, for example white, and the indicia may be black, green, red or any other suitable color.

The indicia may be arranged at the front of the license plate, so that a viewer is provided a direct view on the indicia. Such indicia may also be easy accessible, which may be an advantage in case the indicia comprise variable information, like for example information about official inspections or the like.

In an embodiment of the invention at least part of the indicia are arranged between the retroreflective sheet and the light guide. Such indicia may be permanent information, for example a picture, country or state logo or a security code. Because of the arrangement between the retroreflective sheet and the light guide the indicia in this embodiment may be protected against modification or wear, for example against weathering and wear due to car wash, or against counterfeiting.

In an optional embodiment, the indicia may also be arranged at a back side of the license plate, meaning behind the retroreflective sheet and the lightguide. The indicia in that case may for example be arranged on the retroreflective sheet opposite of the retroreflective side that faces the light guide. This may be of advantage, for example, in case a translucent or semi-transparent retroreflective sheet is used because indicia applied on the rear side of the license plate may be protected from dust, scratching or the like.

The arrangement of the indicia (i) at the front side of the light guide, (ii) between the light guide and the retroreflective sheet or (iii) at the rear side of the retroreflective sheet may also be combined.

In a second aspect the invention is related to a method of making a license plate according to the invention, comprising the steps of
i. providing a light guide comprising a matrix of a transparent polymeric material A that comprises particles of a material B for scattering light within the light guide;
ii. providing a retroreflective sheet having a retroreflective side; and
iii. joining the retroreflective sheet with the light guide, with the retroreflective side facing the light guide.

The method may further comprise the step of applying indicia to the light guide and/or the retroreflective sheet or to a further layer of the license plate. The light guide and the retroreflective sheet may also be affixed to one another. For example the light guide and the retroreflective sheet may be affixed by hot or cold lamination or a combination thereof.

In another embodiment the step of joining the retroreflective sheet with the light guide, for example lamination, comprises the use of an adhesive, wherein the adhesive may be arranged between the light guide and the retroreflective sheet.

In a further embodiment of the invention the method further comprises the step of deforming the license plate to create structures that define indicia. Preferably such deforming comprises embossing. Such embossing is preferably carried out at ambient temperature (20 °C to 35 °C) by pressing a template having a representation of the indicia on the license plate. Such template may for example be made of metallic or thermoset polymeric material, such as steel, brass or glass-fiber reinforced epoxy.

The method may further comprise the step of heating the license plate. For example, the license plate may be heated to soften at least the light guide. The light guide thereby may be heated at least partially and the thus softened area(s) may be deformed, for example embossed while a template representing the indicia on the laminate is pressed on it. Accordingly, this method allows for making a license plate according to the invention by using the equipment that is typically used to make embossed metallic license plates of the current state of the art.

In another embodiment of the invention the method may further comprise the step of coloring of the indicia. This may be made by printing, for example by inkjet, intaglio, screen printing or flexographic printing. The indicia may be also be colored by thermal transfer printing or hot stamping, for example by transferring a layer of colored wax ribbon thereon.

In case the indicia are defined by raised structures the coloring may be made by coating, for example by rolling on ink onto raised areas of the license plate.

Such printing or coating may be produced with existing manufacturing equipment.

A third aspect of the invention is directed to a license plate assembly that comprises a license plate according to the invention. Further the license plate assembly comprises a light source. Preferably the light source is arranged at one or more or all side faces of the light guide. Thus the light source may illuminate the light guide.

The license plate assembly may be adapted so that a user can assemble and disassemble the license plate with the light source. The light source may comprise one or a series of light emitting diodes (LED's). The light source besides the LED(s) may also comprise at least one of a light bulb, an electric discharge lamp and combinations thereof.

A fourth aspect of the invention is related to a device for holding a license plate. The device comprises:
- a light guide comprising a matrix of a transparent polymeric material A having distributed therein particles of a material B for scattering light with in the matrix; and
- a receptacle for holding a license plate component, the license plate component comprising:
   - a retroreflective layer with a retroreflective side; and
   - indicia in front of the retroreflective side,
wherein the assembly is adapted to hold the license plate component with its retroreflective face facing the light guide. The term "indicia in front of the retroreflective side" is related to a position of the indicia between the light guide and the retroreflective layer. The retroreflective layer may be made as specified for the retroreflective sheet above. In particular, the retroreflective layer for use with the license plate component may be cube corner based. Preferably such layer is microsphere based, meaning that it includes a multitude of microspheres, for example glass or ceramic microspheres that are at least partially embedded in a binder layer, and associated with specular or diffuse reflecting material. The reflective material is preferably provided functionally behind the microspheres. The reflective material in one embodiment of this invention can be a reflective layer, for example a metal layer.

The license plate component may also comprise a substrate layer which is preferably arranged behind the retroreflective layer and the indicia. In other words, the retroreflective layer is preferably arranged on the substrate layer with the retroreflective side facing away from the substrate layer. In an embodiment the substrate layer may also serve as reflective layer, for example in case the substrate layer is a metal layer, in particular an aluminum layer. Preferably, the indicia are arranged directly or indirectly on the retroreflective side of the retroreflective layer. The indicia may be formed by raised structures. Such indicia may, for example, be made by cold embossing (for example at 20 °C to 35 °C) of the substrate layer together with the retroreflective layer. The indicia may also be colored, for example by use of any of the methods described in this specification. The license plate component may for example correspond to a conventional license plate as it is commonly used on vehicles today.

A particular embodiment of the device for holding a license plate comprises a housing defining at least partially the receptacle within which the license plate component may be accommodated. Preferably the housing is adapted for enclosing the license plate component. The housing may comprise a holder frame and a cover. For example the holder frame and the cover may be separably attachable to one another so as to form a closed case for the license plate component.

One side of the housing, which is preferably a front side of the housing, may comprise the light guide. Preferably, the light guide is accommodated in the cover, for example the light guide may fill in a window in the cover. In an optional embodiment the cover may be completely made of the matrix of a transparent polymeric material A having distributed therein particles of a material B for scattering light. In other words, the light guide is preferably dimensioned and arranged within the housing so that it provides a view through the housing on at least the indicia of the license plate component that may be held within the housing.

The light guide may be arranged adjacent the receptacle. When the license plate component is held within the housing the light guide preferably contacts the license plate component, for example to clamp the license plate component in position. In an alternate embodiment the housing is designed so that the light guide is spaced away from the license plate component held in the housing. Such space may be in a range of 0.5 mm to 4 mm, for example. In this case, the license plate component may be otherwise fixed to the housing, for example glued to any part of the housing or fixed by hooks arranged at the holder frame or the cover.

In a particular embodiment the license plate component is arranged in the receptacle of the housing with the indicia facing the light guide. Preferably, at least part of the indicia are in contact with the light guide.

In a further embodiment the device may further comprise a light source for illumination of the light guide. Preferably the light source is arranged within the housing, adjacent the receptacle. The light source in particular is preferably arranged adjacent a side face of the light guide so as to allow illumination of the light guide. The light source may be a LED, conventional light bulb or an electric discharge lamp. Optionally the light source may be a window in the housing that allows illumination of the light guide by an external light source through the window. Such external light source may for example be the conventional light source as commonly used in vehicles today.

The device for holding the license plate may be generally water resistant. For example a seal may be used to seal the holder frame with the cover upon assembly.

The device is preferably adapted for retrofitting vehicles with a license plate of the invention.

An embodiment of the invention is directed to a method of retrofitting a license plate according to the invention which comprises the steps of:
i. providing a light guide comprising a matrix of a transparent polymeric material A having distributed therein particles of a material B for scattering light within the light guide; and
ii. providing a retroreflective sheet having a retroreflective face that faces a first side of the light guide,
wherein the retroreflective sheet is arranged on a substrate layer.

The method of retrofitting a license plate may further comprise the step of assembling a housing to a vehicle, in particular the steps of attaching a holder frame to the vehicle and attaching a cover to the holder frame. Further, the method of retrofitting a license plate may comprise the step of electrically connecting a light source of the housing to an electric circuit of the vehicle.

A fifth aspect of the invention is related to a license plate blank from which a license plate may be obtained, the license plate blank comprising:
- a light guide comprising a matrix of a transparent polymeric material A having distributed therein particles of a material B for scattering light within the light guide; and
- a retroreflective sheet having a retroreflective face that faces a first side of the light guide,
wherein the license plate blank allows obtaining a license plate according to the invention by at least removing a part of the license plate blank. Preferably the license plate blank is a continuous sheet that may be provided by a continuous process, for example by extrusion and/or lamination. A license plate may be obtained, for example, by punching or cutting out a smaller area of the larger license plate blank. Indicia may be added either to the license plate blank or to the license plate.

A method of making a license plate blank may comprise the steps of:
i. providing a transparent polymeric material A within which a material B is distributed for scattering light within at least the transparent polymeric material A, the transparent polymeric material A and the material B forming a light guide;
ii. providing a retroreflective sheet; and
iii. combining the light guide and the retroreflective sheet to form a license plate blank.

Furthermore, the method of making a license plate blank may comprise the step of separate a part of the license plate blank to form the license plate.

In a sixth aspect the invention is related to a vehicle that comprises a license plate of the invention.

It is a seventh aspect of the invention to provide a device for deforming a license plate according to the invention. The device for deforming a license plate comprises a heater for heating the license plate at least partially and is adapted to deform the license plate. Preferably the deformation device comprises a stamp for deforming the license plate so as to create a structure defining at least part of indicia.
- Fig. 1: shows a schematic exploded view of a license plate with indicia according to embodiment of the invention;
- Fig. 2: shows a schematic view of a light guide in combination with a light source according to an embodiment of the invention;
- Fig. 3: shows a schematic cross-sectional view of a license plate with indicia arranged between the retroreflective sheet and the light guide according to an embodiment of the invention;
- Fig. 4: shows a schematic cross-sectional view of a license plate with indicia arranged at a front face of the license plate according to an embodiment of the invention;
- Fig. 5: shows a schematic cross-sectional view of a license plate with indicia arranged behind the retroreflective sheet and the light guide according to an embodiment of the invention;
- Fig. 6: shows a schematic cross-sectional view of a license plate with raised indicia according to an embodiment of the invention;
- Fig. 7: shows a schematic cross-sectional view of a license plate formed by a license plate component and a light guide according to an embodiment of the invention;
- Fig. 8: shows a schematic cross-sectional view of a device for holding a license plate according to an embodiment of the invention; and
- Fig. 9: shows a schematic cross-sectional view of another device for holding a license plate according to an embodiment of the invention.

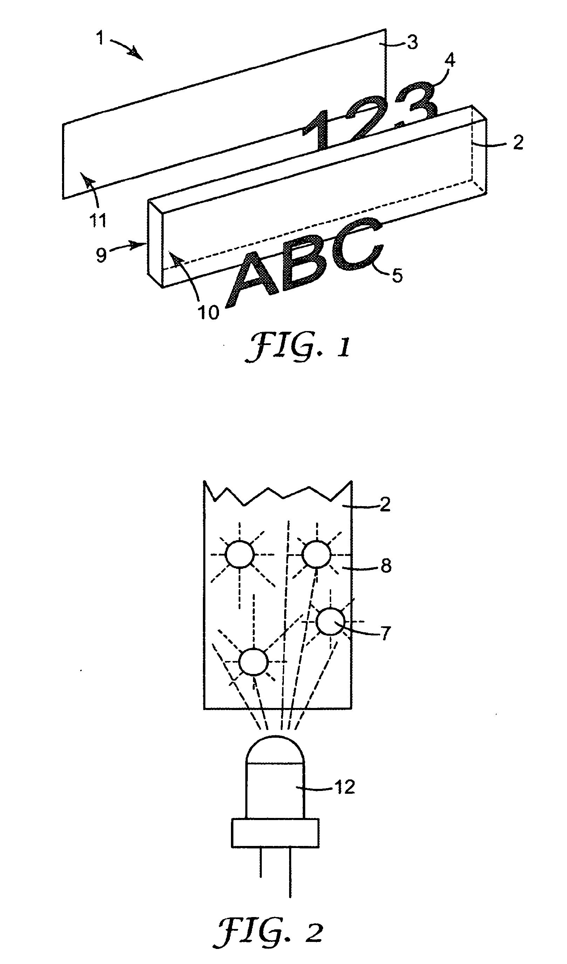

In Fig. 1 a license plate 1 for vehicles is schematically shown in an exploded view. The license plate 1 comprises a light guide 2 and a retroreflective sheet 3. The retroreflective sheet has a retroreflective face 11 that faces a rear side 9 of the light guide 2. Suitable retroreflective sheets include those referred to above.

In the example shown indicia 4 are arranged between the retroreflective sheet and the light guide 2 and indicia 5 are arranged at a front side 10 of the light guide 2. However, in other embodiments the indicia may be arranged either between the retroreflective sheet and the light guide or in front of the light guide. "The front side 10 of the light guide" is the side of the light guide opposite of the retroreflective sheet. The arrangement of indicia "at the front side 10" includes a direct or an indirect arrangement on the light guide. In case the indicia are arranged indirectly on the light guide there may be at least one intermediate layer arranged between the indicia 5 and the light guide 2. For example, a protective film may be arranged between the indicia and the light guide to protect the surface of the light guide from mechanical impacts, like scratching. Other intermediate layers may be used instead or in addition. Such intermediate layers may, for example, provide certain optical properties, like light filtering properties or surface reflectivity. Further the intermediate layers may provide, for example, for easy cleaning (for example by a surface structure that provides a "lotus effect").

In the example shown the indicia 4 ("123") may be standard codes that are the same over a series of license plates, for example country related information provided with all license plates for one country. The indicia 5 may be variable information that are unique for each individual license plate.

Fig. 2 schematically illustrates the light guide 2 in more detail and in particular shows a section of the light guide 2. The light guide 2 has a matrix 8 comprising a transparent polymeric material A with transparent particles 7 of a material B distributed therein. The material B is preferably another transparent polymeric material. As mentioned, Fig. 2 only schematically outlines an example of the inner light guide structure. The shape, size, amount and distribution of the particles may be different from those shown in the figure.

Fig. 2 further shows a light source 12 that is arranged at a side wall of the light guide 2. In the example shown the light source 12 is a LED, however, any suitable light source may be used, like for example one or a series of LEDs, light bulbs, electric discharge lamps as well as combinations thereof. When the LED illuminates the light guide, as indicated by the dashed lines, the light penetrating into the light guide is scattered at the interfaces of the particles and the matrix. Because of the optical properties of the light guide which are achieved by the matrix in combination with the particles the light that penetrates the light guide is substantially homogeneously scattered within the light guide. For this reason the light guide emits generally homogeneous diffuse light from at least the major front and rear sides 9 and 10 when it is illuminated from a side wall. Because of the use of transparent particles the light guide also provides a generally unimpaired view on the retroreflective sheet and indicia that may be arranged between the light guide and the retroreflective sheet. Therefore the invention is of advantage in that it provides efficient license plate illumination and at the same time helps to maintain the retroreflective efficiency of the retroreflective sheet.

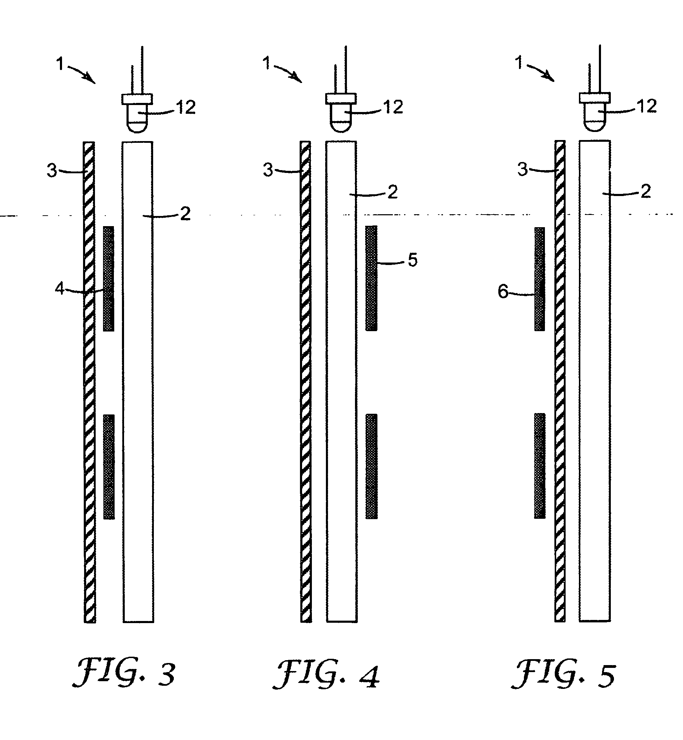

Figs. 3 to 5 show in cross-sectional exploded views embodiments of the license plate 1 with the light guide 2, the retroreflective sheet 3 and the light source 12. The embodiments show the license plate 1 with different arrangements of indicia 4, 5, 6 relative to the light guide 2 and the retroreflective sheet 3. Fig. 3 shows the indicia 4 arranged between the light guide 2 and the retroreflective sheet 3, Fig. 4 shows the indicia 5 in front of the light guide 2 and Fig. 5 shows indicia 6 behind the retroreflective sheet 3 and the light guide 2. The arrangement as illustrated in Figs. 3 to 5 may also be combined as already indicated in Fig. 1 that substantially corresponds to a combination of the embodiments of Figs. 3 and 4. Combinations of Figs. 4 and 5, 3 and 5 and 3, 4 and 5 are also included in this specification.

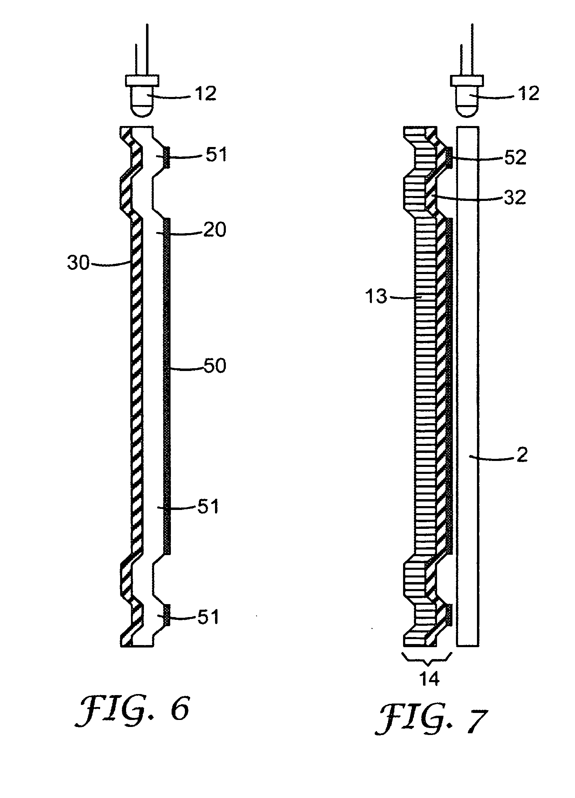

Fig. 6 shows an embodiment of a license plate having a light guide 20, a retroreflective sheet 30 and indicia 50. The license plate has raised portions 51 which preferably carry the indicia 50. Alternatively or additionally the indicia 50 may be arranged on recessed portions of the license plate. The raised portions may be made by embossing, for example provided by cold and/or hot forming. In a preferred embodiment the light guide 20 and the retroreflective sheet 30 are laminated together. The laminate may comprise further layers, for example adhesive layers that hold other layers of the laminate together.

Optionally the laminate comprises at least two layers that can be laminated together by heat lamination without the use of an adhesive. Preferably such layers are made of polycarbonate, amorphous polyethylene terephthalate, acrylonitrile-butadiene-styrene terpolymer, polyvinyl chloride or combinations thereof. In a preferred variant of this optional embodiment one of the aforementioned materials, in particular polycarbonate, substantially forms the matrix of the light guide. In that case the transparent particles of the light guide are preferably made of a polymeric material having a refractive index that is different from that of the matrix material.

Preferably the raised portions in the embodiment shown in Fig. 6 are inked so that the indicia 50 are formed by a layer of ink on the raised portions. The indicia of any embodiment may also be made up by use of at least one film layer, for example a colored or black film layer. One or more film layers and ink may also be combined to form the indicia. The indicia may have a bright surface, for example a white, sliver or metalized surface, at the side facing the light guide so as to provide a certain reflectivity. This may help to minimize losses of the illumination intensity of the license plate. Preferably such bright surface is used in combination with the indicia arranged in front of the light guide. The opposite side of the bright side may be darker, for example black.

Fig. 7 shows another embodiment of the license plate having a light guide 2, a retroreflective layer 32 and indicia 52. The retroreflective layer 32 is combined with a substrate layer 13, for example by lamination, to form a license plate component 14. Preferably the substrate layer 13 is a metal layer, for example an aluminum layer, or plastic layer. The metal layer may also be made of steel. The indicia 52 are preferably arranged on raised portions of the license plate component 14. Alternatively or additionally indicia 52 may be arranged on recessed portions of the license plate component 14, or the license plate component may be a generally flat panel with the indicia applied, for example printed, on it. The license plate component 14 may be removably combined with the light guide 2.

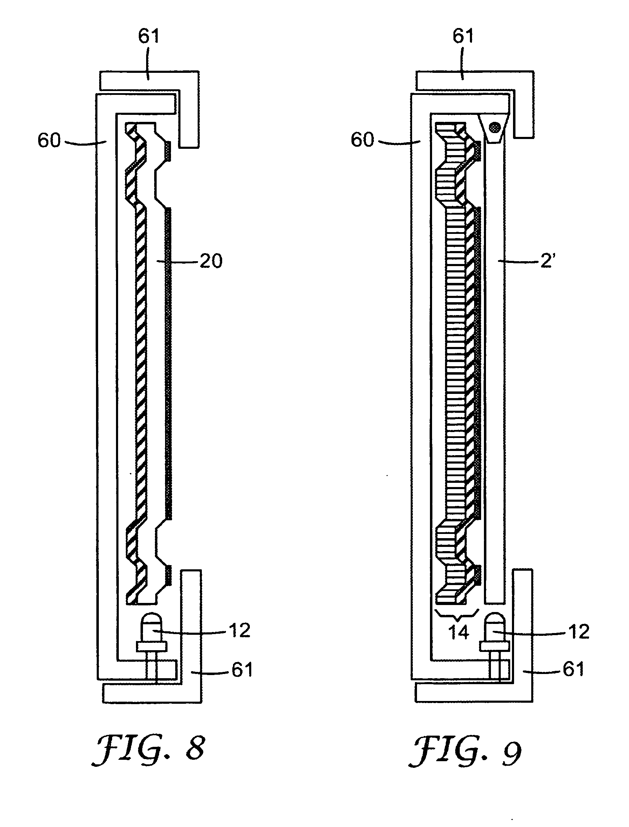

Figs. 8 and 9 show embodiments of a device for holding a license plate according to the invention. The device for holding a license plate comprises a housing that is formed by a holder frame 60 and a cover 61. In one embodiment, however, the housing is optional (not shown). The device for holding a license plate further comprises a light source 12 which is illustrated as an LED, however other light sources are possible as mentioned above. The housing may be adapted to removably hold a license plate according to any embodiment of the invention. The housing may further be adapted to be attached at a vehicle.

Fig. 8 shows an embodiment providing for removable combination of a license plate of the invention with the light source 12. The license plate illustrated in Fig. 8 generally corresponds to the embodiment shown in Fig. 6.

Fig. 9 in particular shows a device for holding a license plate according to the invention. The device comprises a license plate component 14 as also shown in Fig. 7. The light guide 2' and the license plate component 14 form a license plate according to the invention. The light guide 2' is removable from the license plate component 14. In the embodiment shown the light guide is held to the holder frame 60 by a hinged connection. Other connections are however possible, like plug, clamp, snap-on or screw connections. The connection preferably allows the light guide to be separated from the license plate component 14 so as to allow the license plate component 14 to be removed from the housing or inserted into the housing. Preferably the connection also keeps the light guide attached to the housing while it is separated from the license plate, as it is the case for example with the hinge.

The license plate assembly of this embodiment allows for manufacturing of the license plate component 14 independently from the housing and the light guide 2'. The housing with the light guide 2' may, for example, be a standardized part that is attached to a vehicle or which is part of a vehicle, and the license plate component 14 may be removably combinable with it. In case the housing is an optional component of the device the light guide 2' and the light source 12 may be parts that are attached to a vehicle and the license plate component 14 may be removably combinable with the light guide 2' and the light source 12.

## Claims

1. License plate for vehicles, comprising:
i. a light guide comprising a matrix of a transparent polymeric material A having distributed therein particles of a material B for scattering light within the light guide; and
ii. a retroreflective sheet having a retroreflective face **characterized in that** said retroreflective face faces a first side of the light guide.

2. License plate according to claim 1 wherein the particles for scattering light have an average diameter between 1 µm and 50 µm and wherein the particles have a refractive index and the matrix has a refractive index, with the refractive indices of the particles and the matrix being different from each other.

3. License plate according to claim 1 or 2 wherein the matrix comprises at least one of polymethylmethacrylate, polycarbonate, polyester and mixtures thereof, and wherein the particles comprise at least one of polymethylmethacrylate polycarbonate, polyester and mixtures thereof.

4. License plate according to claim 3 wherein the matrix comprises a first polymethylmethacrylate and the particles comprise a second polymethylmethacrylate with the first and second polymethylmethacrylates having different refractive indices.

5. License plate according to claim 1 or 2, wherein the light guide has a thickness of between 1 mm and 20 mm.

6. License plate according to claim 1, further comprising indicia representing an identification code.

7. License plate according to claim 6, wherein at least part of the indicia are arranged between the retroreflective sheet and the light guide.

8. License plate according to claim 6 wherein at least part of the indicia are defined by structures that are raised with respect to the front face.

9. Method of making a license plate as defined in claim 1, comprising the steps of
i. providing a light guide comprising a matrix of a transparent polymeric material A that comprises particles of a material B for scattering light within the light guide;
ii. providing a retroreflective sheet having a retroreflective side, **characterized by** the step of
iii. joining the retroreflective sheet with the light guide, with the retroreflective side facing the light guide.

10. Method according to claim 9, further comprising the step of applying indicia to one of the light guide and the retroreflective sheet.

11. Method according to claim 9 or 10, wherein the light guide and the retroreflective sheet are affixed to one another by hot or cold lamination.

12. Method according to claim 11, wherein the lamination comprises the use of an adhesive.

13. Method of claim 9, further comprising the step of deforming the license plate to create structures that define indicia.

14. Method according to claim 13, further comprising the step of heating the license plate.

15. Method according to claim 13 or 14, further comprising the step of coloring of the indicia.

16. License plate assembly comprising a license plate as defined in claim 1 and a light source arranged at one or more side faces of the light guide for illumination of the light guide.

## Patentansprüche

1. Nummernschild für Fahrzeuge, Folgendes umfassend:
i. einen Lichtleiter, der eine Matrix aus einem transparenten Polymermaterial A umfasst, die darin verteilte Partikel eines Materials B zum Streuen von Licht im Lichtleiter aufweist, und
ii. eine retroreflektive Bahn, die eine retroreflektive Fläche aufweist, **dadurch gekennzeichnet, dass** die retroreflektive Fläche einer ersten Seite des Lichtleiters zugewandt ist.

2. Nummernschild nach Anspruch 1, wobei die Partikel zum Streuen von Licht einen durchschnittlichen Durchmesser zwischen 1 µm und 50 µm aufweisen und wobei die Partikel einen Brechungsindex aufweisen und die Matrix einen Brechungsindex aufweist, wobei sich die Brechungsindizes der Partikel und der Matrix voneinander unterscheiden.

3. Nummernschild nach Anspruch 1 oder 2, wobei die Matrix mindestens einen der Stoffe Polymethylmethacrylat, Polycarbonat, Polyester und Mischungen daraus umfasst und wobei die Partikel mindestens einen der Stoffe Polymethylmethacrylat, Polycarbonat, Polyester und Mischungen daraus umfassen.

4. Nummernschild nach Anspruch 3, wobei die Matrix ein erstes Polymethylmethacrylat umfasst und die Partikel ein zweites Polymethylmethacrylat umfassen, wobei das erste und das zweite Polymethylmethacrylat unterschiedliche Brechungsindizes aufweisen.

5. Nummernschild nach Anspruch 1 oder 2, wobei der Lichtleiter eine Dicke zwischen 1 mm und 20 mm aufweist.

6. Nummernschild nach Anspruch 1, ferner Zeichen umfassend, die einen Kennzeichnungscode darstellen.

7. Nummernschild nach Anspruch 6, wobei mindestens ein Teil der Zeichen zwischen der retroreflektiven Bahn und dem Lichtleiter angeordnet ist.

8. Nummernschild nach Anspruch 6, wobei mindestens ein Teil der Zeichen durch Strukturen definiert ist, die im Verhältnis zur Vorderfläche erhoben sind.

9. Verfahren zur Herstellung eines Nummernschildes nach Anspruch 1, folgende Schritte umfassend:
i. Bereitstellen eines Lichtleiters, der eine Matrix aus einem transparenten Polymermaterial A umfasst, die Partikel eines Materials B zum Streuen von Licht im Lichtleiter umfasst,
ii. Bereitstellen einer retroreflektiven Bahn, die eine retroreflektive Seite aufweist,
**gekennzeichnet durch** den Schritt des
iii. Verbindens der retroreflektiven Bahn mit dem Lichtleiter, wobei die retroreflektive Seite dem Lichtleiter zugewandt ist.

10. Verfahren nach Anspruch 9, ferner den Schritt des Anbringens von Zeichen an den Lichtleiter oder die retroreflektive Bahn umfassend.

11. Verfahren nach Anspruch 9 oder 10, wobei der Lichtleiter und die retroreflektive Bahn durch Heiß- oder Kaltlaminieren aneinander befestigt werden.

12. Verfahren nach Anspruch 11, wobei das Laminieren die Verwendung eines Klebstoffes umfasst.

13. Verfahren nach Anspruch 9, ferner den Schritt des Umformens des Nummernschildes umfassend, um Strukturen zu erzeugen, die Zeichen definieren.

14. Verfahren nach Anspruch 13, ferner den Schritt des Erwärmens des Nummernschildes umfassend.

15. Verfahren nach Anspruch 13 oder 14, ferner den Schritt des Färbens der Zeichen umfassend.

16. Nummernschildanordnung, ein Nummernschild nach Anspruch 1 und eine Lichtquelle umfassend, die an einer oder mehreren Seitenflächen des Lichtleiters angeordnet ist, um den Lichtleiter zu beleuchten.

## Revendications

1. Plaque d'immatriculation pour véhicules, comprenant :
i. un guide de lumière comprenant une matrice d'un matériau polymère transparent A dans laquelle sont distribuées des particules d'un matériau B pour diffuser la lumière à l'intérieur du guide de lumière ; et
ii. une feuille rétroréfléchissante ayant une face rétroréfléchissante, **caractérisée en ce que** ladite face rétroréfléchissante fait face à un premier côté du guide de lumière.

2. Plaque d'immatriculation selon la revendication 1, dans laquelle les particules pour diffuser la lumière ont un diamètre moyen compris entre 1 µm et 50 µm, et dans laquelle les particules ont un indice de réfraction et la matrice a un indice de réfraction, les indices de réfraction des particules et de la matrice étant différents l'un de l'autre.

3. Plaque d'immatriculation selon la revendication 1 ou 2, dans laquelle la matrice comprend au moins un élément parmi un polyméthacrylate de méthyle, un polycarbonate, un polyester et les mélanges de ceux-ci, et dans laquelle les particules comprennent au moins un élément parmi un polyméthacrylate de méthyle, un polycarbonate, un polyester et les mélanges de ceux-ci.

4. Plaque d'immatriculation selon la revendication 3, dans laquelle la matrice comprend un premier polyméthacrylate de méthyle et les particules comprennent un deuxième polyméthacrylate de méthyle, le premier et le deuxième polyméthacrylate de méthyle ayant des indices de réfraction différents.

5. Plaque d'immatriculation selon la revendication 1 ou 2, dans laquelle le guide de lumière a une épaisseur comprise entre 1 mm et 20 mm.

6. Plaque d'immatriculation selon la revendication 1, comprenant en outre des indices représentant un code d'identification.

7. Plaque d'immatriculation selon la revendication 6, dans laquelle au moins une partie des indices est disposée entre la feuille rétroréfléchissante et le guide de lumière.

8. Plaque d'immatriculation selon la revendication 6, dans laquelle au moins une partie des indices est définie par des structures qui sont surélevées par rapport à la face avant.

9. Procédé de fabrication d'une plaque d'immatriculation telle que définie dans la revendication 1, comprenant les étapes consistant à
i. se procurer un guide de lumière comprenant une matrice d'un matériau polymère transparent A qui comprend des particules d'un matériau B pour diffuser la lumière à l'intérieur du guide de lumière ;
ii. se procurer une feuille rétroréfléchissante ayant une face rétroréfléchissante, **caractérisé par** l'étape consistant à
iii. assembler la feuille rétroréfléchissante avec le guide de lumière, avec la face rétroréfléchissante faisant face au guide de lumière.

10. Procédé selon la revendication 9, comprenant en outre une étape consistant à appliquer des indices sur le guide de lumière ou la feuille rétroréfléchissante.

11. Procédé selon la revendication 9 ou 10, dans lequel le guide de lumière et la feuille rétroréfléchissante sont fixés l'un à l'autre par laminage à chaud ou à froid.

12. Procédé selon la revendication 11, dans lequel le laminage comprend l'utilisation d'un adhésif.

13. Procédé selon la revendication 9, comprenant en outre une étape consistant à déformer la plaque d'immatriculation pour créer des structures qui définissent des indices.

14. Procédé selon la revendication 13, comprenant en outre une étape consistant à chauffer la plaque d'immatriculation.

15. Procédé selon la revendication 13 ou 14, comprenant en outre une étape consistant à colorer les indices.

16. Ensemble plaque d'immatriculation comprenant une plaque d'immatriculation telle que définie dans la revendication 1 et une source de lumière disposée sur une ou plusieurs faces latérales du guide de lumière pour éclairer le guide de lumière.
